(19) Europäisches Patentamt / European Patent Office / Office européen des brevets

(11) EP 2 685 017 A1

(12) EUROPEAN PATENT APPLICATION

(43) Date of publication:
**15.01.2014 Bulletin 2014/03**

(51) Int Cl.:
**E03F 5/042** (2006.01)

(21) Application number: **12176032.6**

(22) Date of filing: **11.07.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Planet Patent S.A.**
**1746 Luxembourg (LU)**

(72) Inventor: **Kovács, József**
**H-1055 Budapest (HU)**

(74) Representative: **Kovari, Zoltan**
**Kovári & Partners**
**Patent and Trademark Attorneys LLC**
**Naphegy u. 32**
**1016 Budapest (HU)**

(54) **Bi-directional shut-off valve system, manhole assembly comprising such valve system and use of such valve system in a sewer network**

(57) A bi-directional shut-off valve system for regulating the flow direction of a fluid having a density $\rho_{fl}\tilde{n}_{fl}$ not less than a given minimum density $\rho_{min}\tilde{n}_{min}$, comprising:

- a separator (114) defining an upper and a lower space region (115, 116) and having a through-hole (118) connecting the two space regions,

- a sleeve (129) connected to the through-hole (118),
- an upper valve seat (127) and a lower valve seat (128) provided at the ends (127a, 128a) of the sleeve (129), and
- a double valve element (120) having an upper (126) and a lower valve (131) and a shaft (130) connecting the upper valve (126) and the lower valve (131). The double valve element (120) is arranged such that the shaft (130) is displaceably received in the sleeve (129) with a clearance (132), and the upper valve (126) is situated in the upper space region (115) and the lower valve (131) is situated in the lower space region (116). The material(s) and dimensions of the double valve element (120) are chosen such that the maximal buoyant force exerted by a fluid having the minimum density $\rho_{min}\tilde{n}_{min}$ on the upper valve (126) when seated in the upper valve seat (127) surpasses the gravitational force exerted on the double valve element (120) and the maximal buoyant force exerted by a fluid having the minimum density $\rho_{min}\tilde{n}_{min}$ on the lower valve (131) when seated in the lower valve seat (128) surpasses the gravitational force exerted on the double valve element (120).

Further is described a manhole assembly comprising such a valve system (100) and the use of such a valve system (100) in a sewer network (140).

Fig 2

Fig 3

Fig 1a

Fig 1b

**Description**

The present invention relates to a bi-directional shut-off valve system for regulating the flow direction of a fluid having a density not less than a given minimum density. The invention further relates to a manhole assembly comprising such a valve system, and the use of the valve system in a sewer network.

Valve systems of various constructions exist in the prior art. However, non of the prior art valve systems solve the problem adequately of allowing fluid inflow from an upper direction and preventing fluid outflow from a lower direction as would be desirably in many applications. For example, in the case of a manhole leading to a sewer network fluids such as storm water should find their way into the sewer network through the manhole, while fluids (typically sewage-water) that already entered the sewer network should not be allowed to exit it through the manhole e.g. in case of a gully swell.

Hungarian patent No. P0800360 proposes a single-direction valve system for closing-off manholes so as to allow storm water inflow, however this system cannot handle gully swells as it has no means to prevent the bursting out of sewer fluids.

In case of certain chemical applications where gasses are generated or where liquids of high volatility are used a similar problem may arise: fluid inflow  has to be ensured e.g. to a salvager gully or to a storage tank while fumes and gasses generated therein must be closed-off (e.g. to prevent toxic or inflammable materials from escaping).

It is an object of the present invention to overcome the problems associated with the prior art. In particular, it is an object of the invention to provide a bi-directional shut-off valve system that allows fluids to enter from an upper space region into a lower space region and prevents fluids and gasses from escaping from the lower space region into the upper space region.

It is a further object of the invention to provide a manhole assembly for a sewer network that is furnished with such a bi-directional shut-off valve system.

The above objects are achieved by a bi-directional shut-off valve system according to claim 1.

The above objects are further achieved by a Manhole assembly according to claim 8.

The invention further relates to the use of the bi-directional shut-off valve system in a sewer network as defined in claim 12.

Further advantageous embodiments of the invention are defined in the attached dependent claims.

Further details of the invention will be apparent from the accompanying figures and exemplary embodiments.

Fig. 1 a is a cross sectional side view of an advantageous embodiment of a bi-directional shut-off valve system according to the invention.

Fig. 1b is a sectional view of the bi-directional shut-off valve system taken along line A-A of Fig. 1 a.

Fig. 2 is a cross sectional side view of an advantageous embodiment of a manhole assembly according to the invention.

Fig. 2a is a partial enlarged view of the manhole assembly.

Fig. 3 is a top plan view of the valve-system incorporated in the manhole assembly of Fig. 2.

Fig. 4 is a top plan view of the manhole assembly depicted in Fig. 2.

Fig. 5 is a cross sectional side view of a stud used in the manhole depicted in Fig. 2.

Fig. 6 is a top plan view of the stud depicted in Fig. 5.

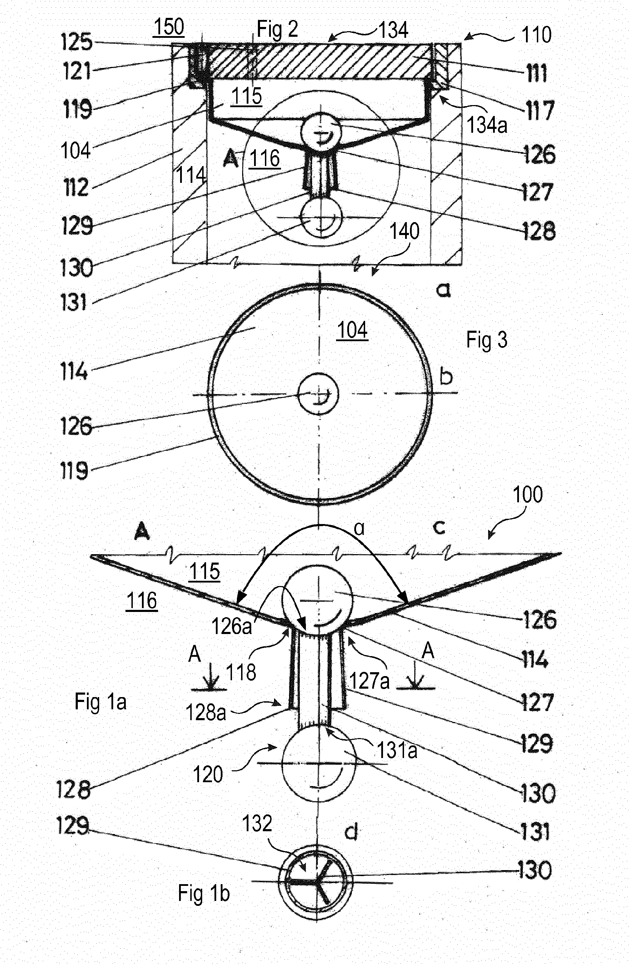

Fig. 1 illustrates a preferred embodiment of a bi-directional shut-off valve system 100 according to the present invention. The valve system 100 comprises a separator 114 defining a convex upper space region 115 and a lower space region 116. The separator 114 is provided with a through-hole 118 at is bottom most portion which through-hole 118 connects the two space regions 115 and 116. A guiding sleeve 129 is connected to the through-hole 118 of the separator 114. An upper valve seat 127 and a lower valve seat 128 are provided at an upper end 127a and a lower end 128a of the sleeve 129 respectively. This includes the possibility that the upper valve seat 127 forms part of the separator 114 in case the guiding sleeve 129 terminates in the through-hole 118 of the separator 114 as in the present embodiment.

In the present embodiment the separator 114 has a conical form extending downwardly and the through-hole 118 is at the lowest part of the cone, i.e. the through-hole 118 is formed at the tip of the cone. This has for advantage that any fluids entering the convex upper space region 115 flow to the bottom of the cone where the fluid may enter the lower space region 116 via the through-hole 118 and the guiding sleeve 129 as will be explained later on. In case of application in sewage manholes the fluid can be a less fluent mixture of higher density (e.g. earth is washed down by storm water forming mud), hence in order to facilitate the collection of the fluid and avoid clogging of any solid deposit and in order to resist pressure in case of gully swells, preferable the opening angle $\alpha$ of the cone is not greater than 150°.

The separator 114 may form the wall of a receptacle (not shown) that serves to collect fluids. In this case the upper space region 115 is inside the receptacle.

Preferably the cross-section of the guiding sleeve 129 widens in the direction of its lower end 128a in order to keep up the flow of the fluid entering from the upper space region 115 and in order to prevent deposit of any solid material carried by the fluid on the inner side wall of the sleeve 129. The opening angle of the walls of the guiding sleeve 129 is preferably about 5 to 6 degrees.

The valve system 100 further comprises a double valve element 120 having an upper gravitational shut-off valve 126 and a lower anti-swell valve 131 and a shaft 130 connecting the upper valve 126 and the lower valve 131. Preferably the upper valve 126 and the lower valve 131 are of a spherical form, and the first valve seat 127 and the second valve seat 128 are each of a circular cross-section. However, it is also conceivable that only a lower portion 126a of the upper valve 126 and an upper portion 131 a of the lower valve 131 are spherical which lower portion 126a of the upper valve 126 and upper portion 131 a of the lower valve 131 are connected by the valve shaft 130. In this case the first valve seat 127 and the second valve seat 128 are preferably each of a circular cross-section as well. More general shapes can be applied too as long as the lower portion 126a of the upper valve 126 is dimensioned so as to shut off the upper valve seat 127 when abutting it and the upper portion 131 a of the lower valve 131 is dimensioned so as to shut off the lower valve seat 128 when abutting it.

The double valve element 120 is arranged such that the shaft 130 is displaceably received within the guiding sleeve 129 with a clearance 132 (depicted in Fig. 1 b) and extends through the upper and lower valve seats 127, 128. Consequently the upper valve 126 is situated in the upper space region 115 and the lower valve 131 is situated in the lower space region 116. It should be noted that in the two extreme positions of the double valve element 120 when either the upper valve 126 abuts the upper valve seat 127 or the lower valve 131 abuts the lower valve seat 128 the shaft 130 may actually extend through only one of the upper and lower valve seats 127, 128 as the lower portion 126a of the upper valve 126 may reach into the upper valve seat 127 and the upper portion 131 a of the lower valve 131 may reach into the lower valve seat 128 respectively.

The valve system 100 is actuated by the difference of the gravitational force exerted on the double valve element 120 and the buoyant force exerted on either the upper valve 127 or the lower valve 128.

The valve system 100 is designed for regulating the flow direction of fluids having at least a minimum density $\tilde{n}_{min}$ by allowing fluids to enter from the upper space region 115 into the lower space region 116 but preventing fluids (and gasses) from escaping from the lower space region 116 into the upper space region 115.

In the rest position the upper valve 126 sits on the upper valve seat 127 thus closing the upper end 127a of the sleeve 129 that is connected to the through-hole 118 of the separator 114 whereby fluid and gas communication is prevented between the upper space region 115 and the lower space region 116. This prevents sewer gasses and odours from entering into the upper space region 115 and into the outside 150 therefrom. In this position the shaft 130 of the double valve element 120 is displaced in the direction of the lower valve seat 128 consequently the lower valve 131 is spaced apart from the lower valve seat 128 whereby the lower space region 116 is in fluid communication with the inside of the sleeve 129, i.e. the clearance 132 between the shaft 130 and the sleeve 129. The lower valve 131 shuts only at the time of a gully swell as will be explained later on.

The upper shut-off valve 126 will be lifted by the buoyant force exerted by a fluid having entered the upper space region 115 when the buoyant force exceeds the gravitational force exerted on the double valve element 120 which can be written as:

$$F_b > F_g$$

wherein $F_b$ is the buoyant force and Fg is the gravitational force.

The gravitational force can be calculated as:

$$F_g = M * g$$

wherein M is the total mass of the double valve element 120 and g is the gravitational constant.

If the upper valve 126 would not be seated in the upper valve seat 127 then the buoyant force $F_b'$ would be:

$$F_b' = \tilde{n}_{fl} * V_{1sub} * g$$

wherein $\tilde{n}_{fl}$ is the density of the fluid, $V_{1sub}$ is the volume of the upper valve 126 that is submersed in the fluid and g is the gravitational constant. Since the upper valve 126 is seated in the upper valve seat 127 the fluid cannot exert pressure on the surface of the lower portion 126a of the upper valve 126, which can be roughly taken into account by a negative force:

$$F = A * ñ_{fl} * h_{1sub} * g$$

wherein A is the cross-sectional area of the upper valve seat 127 (where no buoyant force is exerted), and $h_{1sub}$ is the height of the fluid level calculated from the level of the upper valve seat 127 when the upper valve seat 127 is submersed up to the volume $V_{1sub}$. The total buoyant force $F_b$ exerted on the upper valve 126 when seated in the upper valve seat 127 can be estimated as:

$$F_b = ñ_{fl} * V_{1sub} * g - A * ñ_{fl} * h_{1sub} * g$$

Hence the requirement that the upper valve 126 be lifted from the upper valve seat 127 can be estimated by:

$$ñ_{fl} * V_{1sub} * g - A * ñ_{fl} * h_{1sub} * g > M * g$$

The minimum value of the density $ñ_{fl}$ of the liquid is $ñ_{min}$ and the upper valve 126 has to open for such a minimum density fluid as well which leads to the inequation:

$$ñ_{min} * (V_{1sub} - A * h_{1sub}) > M$$

Depending on the shape of the upper valve 126 the fluid level $h_{1sub}$ can be calculated from the submersed volume $V_{1sub}$ which allows for dimensioning the upper valve 126 and for choosing the material(s) of the double valve element 120 that determine the total mass M so as to ensure that the upper valve 126 will open at a desired fluid level when seated in a valve seat 127 having a given cross-sectional area A.

When the double valve element 120 is lifted the shaft 130 is displaced within the sleeve 129 such that the upper end of the shaft 130 rises above the  upper valve seat 127 whereby the upper valve 126 moves out of the upper valve seat 127 and the fluid in the upper space region 115 can flow into the sleeve 129 (i.e. the clearance 132 between the sleeve 129 and the shaft 130). As the fluid flows into the upper space region 115 then as soon as the double valve element 120 is lifted by the buoyant force and fluid exits through the upper end 127a of the sleeve 129 the submersed volume $V_{sub}$ of the upper valve 126 decreases whereby the buoyant force decreases as well, consequently rising of the double valve element 120 will stop preventing the lower valve 131 from shutting off whereby the fluid will exit the sleeve 129 at its lower end 128a.

The lower anti-swell valve 131 will only shut-off in situations where fluid level rises excessively in the lower space region 116 (e.g. in the case of a gully swell). Similarly to the above described situation, here the buoyant force exerted on the lower valve 131 must surpass the gravitational force exerted on the double valve element 120:

$$ñ_{fl} * V_{2sub} * g > M * g$$

wherein $ñ_{fl}$ is the density of the fluid, $V_{2sub}$ is the volume of the lower valve 131 that is submersed in the fluid and g is the gravitational constant. The submersed volume is less or equal to the total volume $V_2$ of the lower valve 131. Hence:

$$ñ_{fl} * V_2 * g > ñ_{fl} * V_{2sub} * g > M * g$$

The minimum value of the density $ñ_{fl}$ of the liquid is $ñ_{min}$ and the lower valve 131 has to open for a minimum density fluid as well:

$$\tilde{n}_{min} * V_2 * g > \tilde{n}_{min} * V_{2sub} * g > M * g$$

which leads to the minimal requirement:

$$\tilde{n}_{min} * V_2 > M.$$

Thus for ensuring that the upper valve 126 can open and the lower valve 131 can shut off for regulating the flow direction of a fluid having a density not less than a given minimum density $\tilde{n}_{min}$, the conditions to be fulfilled are the following:

$$\tilde{n}_{min} * (V_{1sub} - A * h_{1sub}) > M, \qquad (1)$$

$$\tilde{n}_{min} * V_2 > M. \qquad (2)$$

Accordingly, when dimensioning the valve system 100 for any given application the density of the possible fluids to be regulated has to be taken into account. For example if the valve system 100 is used in a salvager gully of a chemical factory then the chemicals applied there should be considered. In case of application in a manhole of a sewer network the valve system 100 is typically designed to allow drainage of storm water and is preferably adapted to drain off other waste liquids such as oils, petrol, cosmetic lotions, beverages, alcohols, detergents, household cleaning fluids, etc.. Consequently, in this case a greater variety of fluids have to be considered since practically any type of waste fluid may enter the sewer network (even if illegally). This implies that preferably the lightest liquid used in industry should be considered to determine the minimum density $\tilde{n}_{min}$ for which the valve system 100 should still be operational. Preferably the minimum density $\tilde{n}_{min}$ is not more than 0,7 g/cm$^3$, more preferably not more than 0,6 g/cm$^3$, in order to drain off light petrols as well which have a density in the order of 0,7-0,77 g/cm$^3$.

The double valve element 120 can be a single-piece part manufactured of a single material, or it may be made up of more parts, for example a separate upper valve 126, shaft 130 and lower valve 131 that are attached to each other. In the latter case, notwithstanding inequations (1) and (2), the upper and lower valves 126, 131 may be formed of a lighter material of lower density such as PVC or polyethylene, whereas the shaft can be made of a harder material that may have a density which is even higher than the fluid density $\tilde{n}_{fl}$ since the total mass M can still fulfil the inequations (1) and (2) if the upper and lower valves 126, 131 are of sufficiently low density. Moreover, the upper and lower valves 126, 131 is preferably hollow reducing their average density substantially, while the shaft 130 is preferably a profile such as depicted in Fig. 1 b.

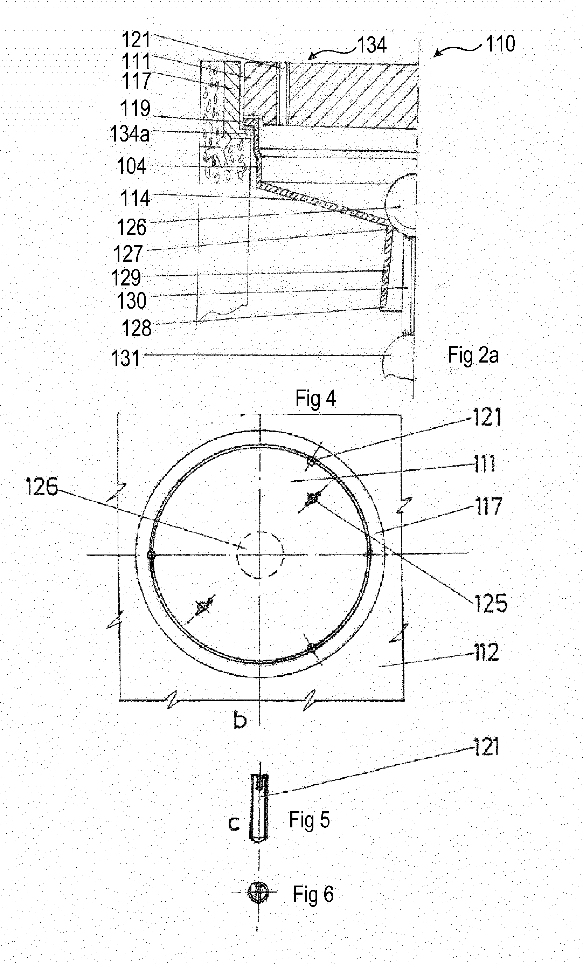

The construction of the valve system 100 has for effect that it also stops gasses and odours from exiting the lower space region 116 through the sleeve 129. In the rest position the upper valve 126 rests on the upper valve seat 127 whereby odours and gasses such as fume, vapour, steam, etc. cannot escape through the upper end 127a of the sleeve 129. Fig. 2 illustrates a preferred embodiment of a manhole assembly 110 according to the invention that comprises the inventive valve system 100. It should be noted that the inventive bi-directional shut-off valve system 100 can be applied in any kind of manhole as regards its shape and whether it has a horizontal manhole opening 134 as depicted in Fig. 2 or a vertical manhole opening as is customary at the side of pavements.

The manhole assembly 110 comprises a manhole 112 that is in communication with a sewer network 140 and an upper manhole opening 134 that is in communication with the outside 150. The bi-directional shut-off valve system 100 according to the invention is arranged within the manhole such that the upper space region 115 defined by the separator 114 communicates with the outside 150 through the opening 134 of the manhole 112, while the lower space region 116 communicates with the sewer network 140 and the upper space region 115 and the lower space region 116 communicate with each other through the through-hole 118 of the separator 114.

The manhole assembly 110 preferably further comprises a manhole cover 111 having pick holes 125 or other kind of openings through which the upper space region 115 defined by the separator 114 and the outside 150 are in communication.

Preferably an inner rim 134a is formed in the inner wall of the manhole 112 by forming the manhole opening 134 with a greater inner cross section than the rest of the manhole 112 (see Fig. 2a). The inner rim 134a and the inner wall of the manhole opening 134 are preferably covered by a steel frame 117 to protect the wall of the manhole opening 134. The rim 134a preferably serves to support the manhole cover 111 which is fitted in the manhole opening 134 and abuts the rim 134a (preferably covered by the steel frame 117).

The separator 114 preferably forms the wall of a receptacle 104 having an upper collar 119 that is also supported by the inner rim 134a of the manhole opening 134 such that the upper collar 119 of the receptacle 104 is located between the rim 134a and the manhole cover 111 (see Fig. 2a). The receptacle 104 can be made e.g. of a fibreglass-polyester composite.

Other possible ways of fixing the valve system 100 within the manhole 112 will be apparent to a person skilled in the art.

The manhole cover 111 is preferably secured against flotation for the case of a major gully swell that would force open the manhole cover 111 together with the receptacle 104. The manhole cover 111 can be secured with at least two screw studs 121, preferably two to four screw studs 121, for example three screw studs 121 as depicted in Fig. 4. A circular manhole cover 111 is preferably secured by at least three screw studs 121 as depicted in Fig. 4, while a rectangular manhole cover 111 could also be secured adequately by two screw studs 121 at opposing corners or by four screw studs 121 each at one corner. The screw studs 121 typically have a transversal groove 121 a at their upper end as shown in Fig. 5 and 6 for screwing them in.

The manhole cover 111 can be secured in any other known way as well, e.g. by two or three welds preferably of about 1 cm length each.

The screw studs (121) or other securing means are disposable because they must be shattered when opening the manhole cover 111, so they must be replaced with new ones from time to time.

The application of the bi-directional shut-off valve system 120 in the manhole assembly 110 allows storm water to be drained down from the upper space region 115 to the lower space region 116 through the through-hole 118 of the separator 114 as it is permitted to flow down the clearance 134 between the shaft 130 of the double valve element 120 and the guiding sleeve 129 of the shaft 130 when the upper valve 126 is lifted from the upper valve seat 127 by the buoyant force as explained before. The valve system 100 also prevents outflow of the sewer water from the sewer network 140 for example in case of a gully swell in which situation the lower valve 131 is lifted by the buoyant force and thus closes on the lower valve seat 128 as explained before. Another important benefit of the valve system 100 is the trapping of odours which is a major problem of prior art manholes. The trapping of odours is achieved by the fact that in the rest position of the double valve element 120 the upper valve 126 closes the upper end 127a of the guiding sleeve 129. A further benefit of the separator 114 and the closed rest position is that it effectively stops rodents and insects from getting into the upper space region 115 from the lower space region 116 thereby preventing escaping into the outside 150. The conical shape of the separator 114 also prevents rodents from climbing into the through-hole 118. Furthermore the separator 114 is preferably made of a material that cannot be bitten through by rodents; suitable material is for example resin. The material and thickness of the wall of the separator 114 is preferably chosen so as to resist burning cigarettes that may fall down through the pick holes 125 of the manhole cover 111.

Preferably the water receiving capacity of the receptacle 104 formed by the separator 114 of the valve system 100 is negligible, thus it is practical for installing into manholes 112, which are not sealed-off air tightly (e.g. in order to allow storm water inflow).

The bi-directional shut-off valve system 100 can be easily installed into manholes 112 by simply lifting the manhole cover 111 and placing the upper collar 119 of the receptacle 104 over the inner rim 134a of the manhole opening 134.

The depicted embodiments shows the installation into a circular manhole 112, however the inventive valve system 100 may be installed into manholes 112 of any shape by forming the separator 114 (and receptacle 104) of the valve system 100 appropriately and providing appropriate fixing means for securing the separator 114 within the manhole 112 as will be clear to the skilled person.

The valve system 100 can be advantageously used in a sewer network that forms a closed system. It should be noted that in closed systems a depressurizing device is used to prevent pressure buildup in the sewer network that could otherwise occur due to the generation of gasses e.g. during chemical decomposition of waste materials. The bi-directional shut-off valve system 100 according to the invention is adapted to operate under normal pressure conditions (preferably slight negative pressure or atmospheric pressure) and effectively hinders gully swells which could happen even in case of closed systems.

The bi-directional shut-off valve system 100 according to the invention may be used in other applications as well, as the valve system 100 is designed for receiving and draining-off fluids and for preventing the outflow of fluids or gasses which properties can be made use of in various applications. For example the inventive valve system 100 may be applied in chemical factories or factories processing or generating hydrocarbon or other gasses that are inflammable, explosive or toxic, or where strongly evaporating liquids or pulverulent, powdery materials are used, or where fluids or gasses may escape from a closed system in case of a breakdown. Through the application of the double valve element 120 of the valve system 100 gasses of any volatile liquids and gasses processed or generated in closed systems stay trapped in the receptive area (e.g. salvager gully, storage tank), thus unwanted or explosive gasses cannot escape and form an explosive blend with air. The valve system 100 according to the invention may also be used for trapping toxic or inflammable liquids. It may be installed into salvager gullies as it can also prevent the evaporation of any unwanted or explosive liquids or other materials. For such applications the valve system 100 can be of any shape or dimension required by the application.

The above-described embodiments are intended only as illustrating examples and are not to be considered as limiting the invention. Various modifications will be apparent to a person skilled in the art without departing from the scope of protection determined by the attached claims.

**Claims**

1. Bi-directional shut-off valve system for regulating the flow direction of a fluid having a density $\tilde{n}_{fl}$ not less than a given minimum density $\tilde{n}_{min}$, **characterised by** comprising:

   - a separator (114) defining an upper space region (115) and a lower space region (116) and having a through-hole (118) connecting the two space regions (115, 116),
   - a sleeve (129) connected to the through-hole (118),
   - an upper valve seat (127) and a lower valve seat (128) provided at the upper end (127a) and at the lower end (128a) of the sleeve (129) respectively, and
   - a double valve element (120) having an upper valve (126) and a lower valve (131) and a shaft (130) connecting a lower portion (126a) of the upper valve (126) and a upper portion (131 a) of the lower valve (131), and the double valve element (120) being arranged such that the shaft (130) is displaceably received in the sleeve (129) with a clearance (132), and the upper valve (126) is situated in the upper space region (115) and the lower valve (131) is situated in the lower space region (116), and the lower portion (126a) of the upper valve (126) is dimensioned so as to shut-off the upper valve seat (127) when abutting it and the upper portion (131 a) of the lower valve (131) is dimensioned so as to shut-off the lower valve seat (128) when abutting it, and the material (s) and dimensions of the double valve element (120) are chosen such that the maximal buoyant force exerted by a fluid having the minimum density $\tilde{n}_{min}$ on the upper valve (126) when seated in the upper valve seat (127) surpasses the gravitational force exerted on the double valve element (120) and the maximal buoyant force exerted by a fluid having the minimum density $\tilde{n}_{min}$ on the lower valve (131) when seated in the upper valve seat (128) surpasses the gravitational force exerted on the double valve element (120).

2. The valve system according to claim 1, wherein the valve system (100) further comprises a receptacle (104) and the separator (114) forms the wall of the receptacle (104) and the upper space region (115) is inside the receptacle (104).

3. The valve system according to claim 2, wherein the receptacle (104) has un upper collar (119) that is dimensioned so as to fit on an inner rim (134a) of a manhole opening (134).

4. The valve system according to any of claims 1 to 3, wherein the separator (114) has a conical region that extends downwardly and the through-hole (118) is at the lowest part of the conical region, furthermore the opening angle of the cone is preferably not greater than 150°.

5. The valve system according to any of claims 1 to 4, wherein the lower portion (126a) of the upper valve (126) and the upper portion (131 a) of the lower valve (131) are spherical, and the upper valve seat (127) and the lower valve seat (128) are each of a circular cross-section.

6. The valve system according to any of claims 1 to 5, wherein the upper and lower valves (126, 131) are of a spherical form, and the upper and lower valve seats (127, 128) are each of a circular cross-section.

7. The valve system according to any of claims 1 to 6, wherein the cross-section of the sleeve (129) widens in the direction of its lower end (128a).

8. Manhole assembly comprising a manhole (112) being in communication with a sewer network (140) and an upper manhole opening (134) being in communication with the outside (150), **characterised by** comprising a bi-directional shut-off valve system (100) according to any of the claims 1 to 7, wherein the separator (114) of the valve system (100) is arranged within the manhole (112) such that the upper space region (115) communicates with the outside

(150) through the opening (134) of the manhole (112), optionally through pick holes (125) or other openings of a manhole cover (111) covering the opening (134) of the manhole (112), while the lower space region (115) communicates with the sewer network (140), and the upper and lower space regions (115, 116) communicate with each other through the through-hole (118) of the separator (114).

9. The manhole assembly according to claim 8, wherein the separator (114) forms the wall of a receptacle (104) and an upper collar (119) of the receptacle (104) is supported by an inner rim (134a) of the manhole opening (134).

10. The manhole assembly according to claim 9, wherein the manhole (112) comprises a manhole cover (111) which is supported by the inner rim (134a) of the manhole opening (134) that is preferably covered by a steel frame (117) having a corresponding lower rim, such that the upper collar (119) of the receptacle (104) is located between the lower rim of the steel frame (117) and the manhole cover (111).

11. The manhole assembly according to any of claims 8 to 10, wherein the manhole cover (111) is secured to the steel frame (117) of the manhole opening (134) by at least two screw studs (121), preferably two to four screw studs (121) or by other means, such as by two or three welds preferably of about 1 cm length each.

12. Use of the bi-directional shut-off valve system (100) according to any of the claims 1 to 7 in a sewer network (140) comprising at least one manhole (112) and an upper manhole opening (134) being in communication with the outside (150), **characterised in that** the separator (114) of the valve system (100) is arranged within the manhole (112) such that the upper space region (115) communicates with the outside (150) through the opening (134) of the manhole (112), optionally through pick holes (125) or other openings of a manhole cover (111) covering the opening (134) of the manhole (112), while the lower space region (115) communicates with the sewer network (140), and the upper and lower space regions (115, 116) communicate with each other through the through-hole (118) of the separator (114).

13. The use according to claim 12, wherein the separator (114) forms the wall of a receptacle (104) and an upper collar (119) of the receptacle (104) is supported by an inner rim (134a) of the manhole opening (134).

14. The use according to claim 13, wherein the manhole (112) comprises a manhole cover (111) which is supported by the inner rim (134a) of the manhole opening (134) such that the upper collar (119) of the receptacle (104) is located between the rim (134a) and the manhole cover (111).

15. The use according to any of claims 12 to 14, wherein the sewer network (140) is a closed system.

121
111
117
119
134a
104
114
126
127
129
130
128
131

134

110

Fig 2a

Fig 4

126

121
111
117

125

112

b

121

Fig 5
c

Fig 6

Fig 2

Fig 3

Fig 1a

Fig 1b

Europäisches
Patentamt
European
Patent Office
Office européen
des brevets

**EUROPEAN SEARCH REPORT**

Application Number

EP 12 17 6032

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 39 36 057 C1 (AUDI AG) 8 November 1990 (1990-11-08) * column 3, lines 20-53 * * figures * ----- | 1 | INV. E03F5/042 |
| X | FR 2 786 261 A1 (FRANCE ETAT [FR]) 26 May 2000 (2000-05-26) * page 6, lines 4-30; figures * ----- | 1 | |
| A | US 5 662 138 A (WANG WEN-HSING [TW]) 2 September 1997 (1997-09-02) * column 2, lines 39-65; figures 3-5 * ----- | 8-15 | |

TECHNICAL FIELDS
SEARCHED      (IPC)

E03F
E03C
F16K

The present search report has been drawn up for all claims

| Place of search | Date of completion of the search | Examiner |
|---|---|---|
| The Hague | 23 November 2012 | Urbahn, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 12 17 6032

This annex lists the patent family members relating to the patent documents cited in  the above-mentioned European search report.
The members are as contained in the European Patent Office EDP file on
The European Patent Office is in no way liable for these particulars which are merely given for the purpose of information.

23-11-2012

| Patent document cited in search report | | Publication date | Patent family member(s) | | Publication date |
|---|---|---|---|---|---|
| DE 3936057 | C1 | 08-11-1990 | DE | 3936057 C1 | 08-11-1990 |
| | | | EP | 0425862 A1 | 08-05-1991 |
| | | | ES | 2040015 T3 | 01-10-1993 |
| FR 2786261 | A1 | 26-05-2000 | NONE | | |
| US 5662138 | A | 02-09-1997 | NONE | | |

EPO FORM P0459

For more details about this annex : see Official Journal of the European Patent Office, No. 12/82

**EP 2 685 017 A1**

## REFERENCES CITED IN THE DESCRIPTION

**Patent documents cited in the description**

- HU P0800360